(19) Europäisches Patentamt
European Patent Office
Office européen des brevets

(11) **EP 2 005 274 B1**

(12) **EUROPÄISCHE PATENTSCHRIFT**

(45) Veröffentlichungstag und Bekanntmachung des Hinweises auf die Patenterteilung:
**28.12.2011 Patentblatt 2011/52**

(21) Anmeldenummer: **07702434.7**

(22) Anmeldetag: **14.02.2007**

(51) Int Cl.:
***G05F 1/56*** *(2006.01)*

(86) Internationale Anmeldenummer:
**PCT/DE2007/000269**

(87) Internationale Veröffentlichungsnummer:
**WO 2007/112713 (11.10.2007 Gazette 2007/41)**

(54) **REGELEINRICHTUNG ZUR REGELUNG DER SPANNUNG ÜBER EINER SICH IN HIGH-SIDE BEFINDLICHEN LAST**

REGULATING DEVICE FOR REGULATING THE VOLTAGE ON A HIGH-SIDE LOAD

DISPOSITIF DE REGULATION DESTINE A LA REGULATION DE LA TENSION VIA UNE CHARGE COTE ELEVE

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **05.04.2006 DE 102006016338**

(43) Veröffentlichungstag der Anmeldung:
**24.12.2008 Patentblatt 2008/52**

(73) Patentinhaber: **Sitronic Ges. für elektrotechnische Ausrüstung mbH & Co. KG 71116 Gärtringen (DE)**

(72) Erfinder: **ZAMETZKY, Klaus 91126 Schwabach (DE)**

(74) Vertreter: **Kohler Schmid Möbus Patentanwälte Ruppmannstraße 27 70565 Stuttgart (DE)**

(56) Entgegenhaltungen:
**EP-A- 1 422 819    JP-A- 1 302 409
JP-A- 9 215 321**

## Beschreibung

Die Erfindung betrifft eine elektronische, durch ein pulsweitenmoduliertes Signal gesteuerte, Regeleinrichtung zur Regelung der Spannung über einer sich in High-Side befindlichen Last, insbesondere einen Gebläseregler für Kraftfahrzeuge.

Derartige Regeleinrichtungen sind durch ihre Verwendung in Kraftfahrzeugen allgemein bekannt.

Durch die JP 01302409 AA ist eine elektronische Regeleinrichtung zur Regelung der Spannung mit einer auf das positive Potenzial der Versorgungsspannung bezogenen Führungsgröße für die Regelung bekannt geworden.

Durch die JP 09215321 AA ist eine Regeleinrichtung mit einem Schaltungsteil bekannt geworden, der das pulsweitenmodulierte Signal in die für die Regelung nötige Führungsgröße umsetzt. Dabei wird die Masse als Bezugspotenzial verwendet.

Eine wichtige Grundfunktion der Regeleinrichtung stellt die Regelung der Motorspannung in Abhängigkeit von einem Steuersignal dar. Dieses Steuersignal kann eine analoge Steuerspannung, ein analoger Steuerstrom oder ein digitales Signal sein. Regeleinrichtungen für Gebläse nach der Lehre des Stands der Technik setzen intern Steuerströme und digitale Steuersignale in eine Steuerspannung um, sodass im Prinzip immer ein Regelkreis vorliegt, der die Motorspannung in Abhängigkeit von einer Steuerspannung regelt. Ist das Steuersignal ein digitales Steuersignal, so ist eine Vorrichtung vorgesehen, die aus dem digitalen Steuersignal eine analoge Steuerspannung erzeugt. Die analoge Steuerspannung steht in einem eindeutigen funktionalen Zusammenhang zum digitalen Steuersignal. Im Allgemeinen ist das digitale Steuersignal ein PWM- Signal, bei dem die gewünschte Sollgröße im Tastverhältnis zwischen aktivem und inaktivem Steuersignal kodiert ist.

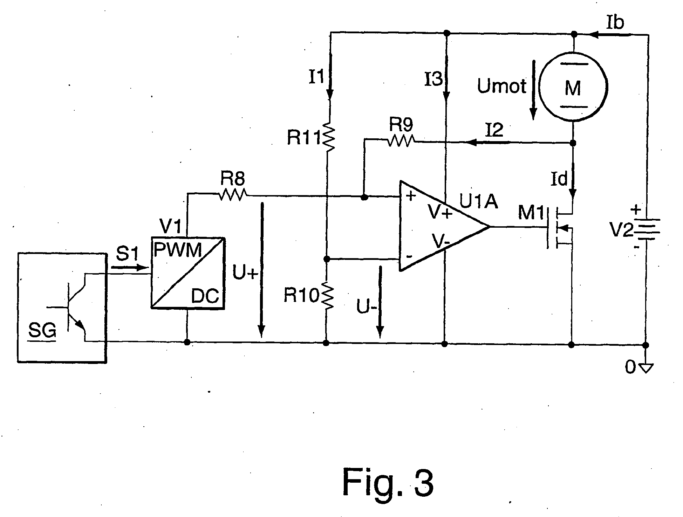

Bekannte lineare Regeleinrichtungen für Gebläse mit digitalem Steuersignal verwenden im Allgemeinen die in Figur 3 dargestellte Schaltungstopologie. Eine Fahrzeugbatterie V2 liefert die Stromversorgung für die gesamte Anordnung. Die lineare Regeleinrichtung ist mit dem Ausgang eines Steuergeräts verbunden, über welchen das digitale Steuersignal S1 übertragen wird. Im Steuergerät wird dieses Signal üblicherweise mit einem Transistor erzeugt, der im aktiven Zustand das Signal mit Masse verbindet und im inaktiven Zustand die Leitung offen läst. Die Größe des Sollwerts der Motorspannung ist im Allgemeinen im Tastverhältnis aus aktivem und inaktivem Zustand des Steuersignals kodiert. Aus diesem pulsweiten-moduliertem Signal lässt sich beispielsweise durch Tiefpassfilterung eine zur Sollgröße proportionale Steuerspannung V1 generieren. Ein Operationsverstärker U1A stellt seine Ausgangsspannung und damit die Gate-Source-Spannung des Mostransistors M1 so ein, dass U+ näherungsweise gleich U- wird. Die Anordnung kann durch entsprechende Gleichungen beschrieben werden. Wählt man R8/R9 = R10/R11, so ergibt sich für Steuerspannung V1 und Motorspannung $U_{mot}$ folgender Zusammenhang:

$$U_{mot} = V1 \; \dot{*} \; (R9/R8)$$

Eine wesentliche Forderung an eine Regeleinrichtung für ein Gebläse ist die Ausregelung von Bordspannungsschwankungen. $U_{mot}$ sollte unabhängig von V2 sein. Dies gilt nur dann, wenn exakt R8/R9 = R10/R11 ist. Das Verhalten der Regeleinrichtung gemäß Figur 3 ist daher bei Bordspannungsschwankungen dV2 von der Paarungstoleranz der Spannungsteiler R8/R9 und R10/R11 abhängig.

Der Zusammenhang $U_{mot}$ = f(V1) wird, ideale Bauteile und ideale Paarungstoleranz R8/R9 = R10/R11 vorausgesetzt, nur durch das Widerstandsverhältnis R8/R9 bestimmt. $U_{mot}$ ist weitgehend unabhängig von V2. Der Operationsverstärker regelt Bordspannungsschwankungen aus.

Im Standby-Betrieb ist. V1 = 0. Die Stromaufnahme Ib der Anordnung wird in diesem Fall als Ruhestrom bezeichnet und sollte so gering wie möglich sein, um die Batterie nicht zu entladen.

Im Fall V1 = 0 ist $U_{mot}$ = 0 und somit auch Id = 0 (moderne Mosfets weisen sehr kleine Sperrströme auf). Demnach ist Ib = I1 + I2 + I3. I3 kann durch die Verwendung eines Ultra-Low-Power-Opamps auf sehr niedrigem Niveau gehalten werden.

Möchte man aus Kostengründen auf einen Verguss der Reglerelektronik verzichten, so ist ein Einsatz hochohmiger Widerstände problematisch. Betauung und die damit verbundenen Verunreinigungen auf der Platinenoberfläche, die im Fahrzeug auftreten, führen zu Kriechströmen, welche die Funktion hochohmig dimensionierter Schaltkreise beeinflussen. R8 bis R11 können daher nicht beliebig hochohmig gemacht werden. Somit belasten 11 und 12 die Batterie im Standby- Betrieb.

Der Erfindung liegt die Aufgabe zu Grunde, die Regelung zu verbessern.

Der Wandler selbst hat im Vergleich zu Wandlern nach dem Stand der Technik keine verbesserten Eigenschaften. Die Verbesserung kommt dadurch zu Stande, dass als Bezugspunkt für den Wandler +Ub und nicht GND gewählt wird.

Die Aufgabe wird durch eine Regeleinrichtung gemäß Patentanspruch 1 gelöst. Vorteilhafte Weiterbildungen der Erfindung sind in den Patentansprüchen 2 bis 5 enthalten.

Die Erfindung ermöglicht den Aufbau einer Regeleinrichtung insbesondere für ein Gebläse mit vergleichsweise wenigen diskreten Bauteilen. Die Regeleinrichtung zeichnet sich durch ein gutes Regelverhalten und eine extrem kleine Ruhestromaufnahme aus.

Zwei bevorzugte Ausführungsbeispiele der Erfindung sind in der Zeichnung schematisch dargestellt und werden anhand der Figuren der Zeichnung nachfolgend erläutert. Es zeigt:

Figur 1      einen Stromlaufplan eines Beispiels einer Regeleinrichtung;

Figur 2      einen Stromlaufplan einer erfindungsgemäßen Regeleinrichtung;

Figur 3      einen Stromlaufplan einer bekannten Regeleinrichtung.

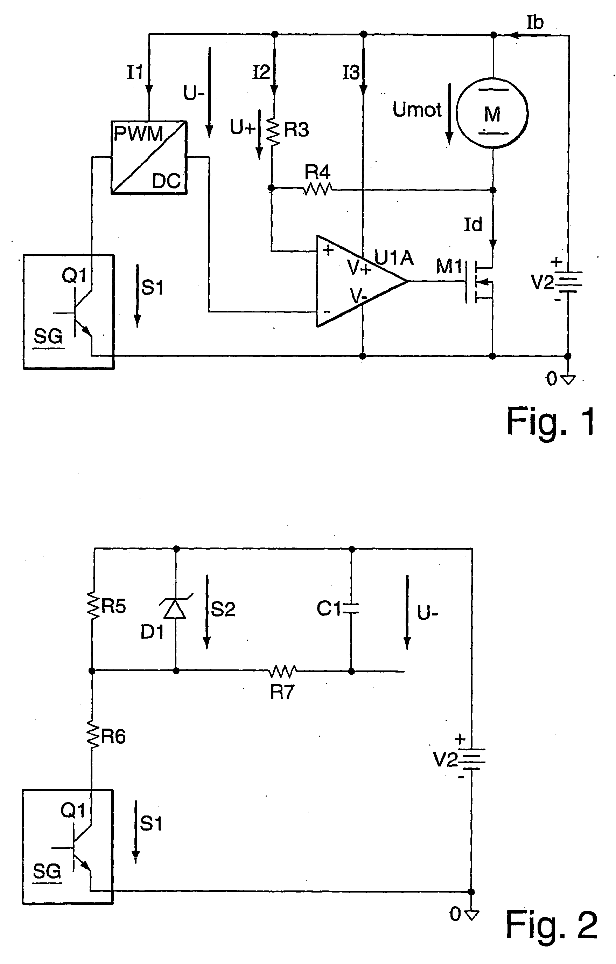

Gemäß Figur 1 wird aus dem pulsweiten-modulierten Steuersignal S1 eines Steuergeräts SG einer Klimaanlage eine Steuerspannung U- erzeugt, die zum einen auf die positive Versorgungsspannung V2 bezogen ist und deren Größe in einem eindeutigen funktionalen Zusammenhang zum Tastverhältnis des Steuersignals S1 steht.

In der bevorzugten Ausführungsform ist das pulsweitenmodulierte Steuersignal S1 auf Masse bezogen.

Die beiden Eingangspannungen des Reglers U1A sind auf die positive Versorgungsspannung U2 bezogen. Damit ist $U_{mot}$ gemäß dem Stromlaufplan nach Figur 1 :

$$U_{mot} = U_- \cdot \left(1 + \frac{R_4}{R_3}\right)$$

und damit unabhängig von V2.

Widerstandspaarungstoleranzen gehen bei der Beziehung $dU_{mot} = f(dV2)$ im Gegensatz zum Stromlaufplan gemäß Figur 1 nicht ein.

Nach der Lehre der Erfindung werden daher Bordspannungsschwankungen besser aus geregelt.

Der Regler U1A erkennt, wenn das Ausgangssignal des PWM / DC-Umsetzers, d.h. U., unter einen bestimmten Schwellwert fällt, und versetzt sich in diesem Fall selbst und den nachfolgenden Transistor M1 in einen stromlosen Ruhezustand. Dann werden $I_2 \approx 0$, $I_3 \approx 0$, $I_d \approx 0$, und somit $I_b \approx 0$. Die Schaltung weist daher eine extrem kleine Stromaufnahme auf, wenn der Transistor Q1 des Steuergerätes dauerhaft gesperrt ist.

Selbst bei niederohmiger Dimensionierung belasten I2 und I3 die Batterie V2 im Ruhebetrieb nicht.

In einer weiteren Ausführungsform nach Fig.2 wird das Steuersignal S1, das auf Masse bezogen ist, durch den Spannungsteiler R5/R6 und die Zenerdiode D1 in ein, auf die positive Versorgungsspannung bezogenes pulsweitenmoduliertes Signal S2 umgewandelt. Dieses Signal wird mit einem Tiefpassfilter R7/C1 in eine lineare Steuerspannung U- gewandelt, die in guter Näherung proportional zum Tastverhältnis des Steuersignals S1 ist. Die Vorrichtung ist stromlos, wenn der Transistor Q1 dauerhaft ausgeschaltet ist und erfüllt die Forderung nach geringer Ruhestromaufnahme daher ohne zusätzlichen Schaltungsaufwand.

**Patentansprüche**

1. Elektronische, durch ein auf Masse bezogenes pulsweitenmoduliertes Signal (SG) gesteuerte, Regeleinrichtung zur Regelung der Spannung (Umot) über einer sich in High-Side befindlichen Last (M), insbesondere ein Gebläseregler für Kraftfahrzeuge, wobei der Schaltungsteil, der das pulsweitenmodulierte Signal (SG) in die für die Regelung nötige Führungsgröße (U-) umsetzt, das positive Potential der Versorgungsspannung (V2) als Bezugspotential verwendet, sodass die Führungsgröße (U-) ebenfalls auf das positive Potential der Versorgungsspannung bezogen ist und das Steuersignal (SG) mit einer Zenerdiode (D1) und mit einem parallel zur Zenerdiode (D1) geschalteten Widerstand (R5) in ein auf das positive Versorgungspotential bezogene Steuersignal und weiter mit einem Tiefpassfilter (R7, C1) in ein lineares Steuersignal gewandelt wird, welches als Führungsgröße (U-) dient.

2. Regeleinrichtung nach Anspruch 1, **dadurch gekennzeichnet, dass** die dem Regler (U1A) zugeführten Eingangsspannungen auf das positive Versorgungspotential bezogen sind, von dem die Last gespeist wird.

3. Regeleinrichtung nach einem der vorhergehenden Ansprüche, **dadurch gekennzeichnet, dass** die Regelung der Lastspannung bei Versorgungsspannungsschwankungen unabhängig von einer Widerstandspaarung ist.

4. Regeleinrichtung nach einem der vorhergehenden Ansprüche, **dadurch gekennzeichnet, dass** der Regler (U1A) erkennt, wenn die Ausgangsspannung des PWM / DC- Umsetzers unter einen Schwellwert sinkt, und in diesem Fall sich selbst und den nachfolgenden Transistor (M1) in einen stromlosen Ruhezustand versetzt.

5. Regeleinrichtung nach einem der vorhergehenden Ansprüche, **dadurch gekennzeichnet, dass** die Anordnung eine von der Dimensionierung der Widerstände (R3, R4) unabhängige Ruhestromaufnahme aufweist.

**Claims**

1. Electronic control system, controlled by a pulse width-modulated signal (SG) related to earth, for regulating the voltage (Umot) across a high-side load (M), in particular a fan control unit for motor vehicles, wherein the circuit part that converts the pulse width-modulated signal (SG) into the reference input variable (U-) needed for the regulation uses the positive potential of the supply voltage (V2) as reference potential, so that the reference input variable (U-) is likewise related to the positive potential of the supply voltage and the control signal (SG) is converted by means of a Zener diode (D1) and by means of a resistance (R5) connected parallel to the Zener diode (D1) into a control signal related to the positive supply potential and is further converted with a low pass filter (R7, C1) into a linear control signal, which serves as input reference variable (U-).

2. Control system according to claim 1, **characterised in that** the input voltages supplied to the regulator (U1A) are related to the positive supply potential from which the load is fed.

3. Control system according to any one of the preceding claims, **characterised in that** the regulation of the load voltage during supply voltage fluctuations is independent of a resistance pairing.

4. Control system according to any one of the preceding claims, **characterised in that** the regulator (U1A) recognises when the output voltage of the PWM/DC-inverter falls below a threshold value, and **in that** case transfers itself and the downstream transistor (M1) into a zero-current state of rest.

5. Control system according to any one of the preceding claims, **characterised in that** the arrangement has a quiescent current consumption independent of the dimensioning of the resistors (R3, R4).

**Revendications**

1. Dispositif de régulation électronique, commandé par un signal modulé en largeur d'impulsion (SG) référencé à la masse, destiné à réguler la tension (Umot) aux bornes d'une charge (M) se trouvant du côté haut (high), en particulier un dispositif de réglage de soufflerie pour véhicules automobiles, la partie circuit qui convertit le signal modulé en largeur d'impulsion (SG) en la grandeur de commande (U-) nécessaire pour la régulation utilisant le potentiel positif de la tension d'alimentation (V2) comme potentiel de référence, de sorte que la grandeur de commande (U-) est également référencée au potentiel positif de la tension d'alimentation et le signal de commande (SG) est converti au moyen d'une diode Zener (D1) et d'une résistance (R5) branchée en parallèle avec la diode Zener (D1) en un signal de commande référencé au potentiel positif d'alimentation et ensuite, au moyen d'un filtre passe-bas (R7, C1), en un signal de commande linéaire qui sert de grandeur de commande (U-).

2. Dispositif de régulation selon la revendication 1, **caractérisé en ce que** les tensions d'entrée amenées au régulateur (U1A) sont référencées au potentiel positif d'alimentation par lequel la charge est alimentée.

3. Dispositif de régulation selon une des revendications précédentes, **caractérisé en ce que** la régulation de la tension de charge en cas de fluctuations de la tension d'alimentation est indépendante d'un appariement de résistances.

4. Dispositif de régulation selon une des revendications précédentes, **caractérisé en ce que** le régulateur (U1A) détecte quand la tension de sortie du convertisseur PWM /DC baisse au-dessous d'une valeur seuil et, dans ce cas, se met lui-même et le transistor suivant (M1) dans un état de repos sans courant.

5. Dispositif de régulation selon une des revendications précédentes, **caractérisé en ce que** l'agencement présente une consommation de courant de repos indépendante du dimensionnement des résistances (R3, R4).

Fig. 1

Fig. 2

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- JP 01302409 A
- JP 09215321 B